# EUROPÄISCHE PATENTANMELDUNG

(11) **EP 4 344 853 A1**
(43) Veröffentlichungstag der Anmeldung: **03.04.2024**
(21) Anmeldenummer: 22198236.6
(22) Anmeldetag: 28.09.2022
(51) Int. Cl.: B29C 51/46, B26D 7/26, B29C 51/38

(54) **FORMSTATION ODER STANZSTATION ODER KOMBINIERTE FORM-STANZSTATION SOWIE THERMOFORMANLAGE**

(71) Anmelder: Gabler Thermoform GmbH & Co. KG, 23568 Lübeck (DE)
(72) Erfinder: Rowedder, Axel, 23623 Ahrensbök (DE)
(74) Vertreter: Kross, Ulrich

(57) **Zusammenfassung**

Die Erfindung betrifft eine Station als Formstation (9) oder Stanzstation (10) oder kombinierte Form-/Stanzstation (2) einer Thermoformanlage oder Thermoformmaschine (1) zum Herstellen von Formteilen aus einer thermoplastischen Kunststofffolie (3), mit wenigstens zwei jeweils einem an einem Tisch (11,12) befestigten Werkzeugen (13,14), wobei wenigstens ein Tisch beweglich geführt in einem Maschinengestell gelagert ist und mittels wenigstens eines Antriebs über ein Getriebe zum Vollzug einer intermittierenden Hubbewegung verlagerbar ist, wobei die Station weiterhin Mittel zur Verstellung einer Eingriffslage der Werkzeuge aufweist, dadurch gekennzeichnet, dass zur Verstellung der Eingriffslage des Werkzeugs der durch den Antrieb bewirkte Hub des Tisches über eine Antriebssteuerung einstellbar ist. Die Erfindung betrifft weiterhin eine Thermoformmaschine (1) sowie ein Verfahren zur Verstellung der Eingriffslage der Werkzeuge an einer Station gemäß der Erfindung.

## Beschreibung

Die Erfindung betrifft eine Station als Formstation oder Stanzstation oder kombinierte Form-/Stanzstation einer Thermoformanlage oder Thermoformmaschine zum Herstellen von Formteilen aus einer thermoplastischen Kunststofffolie, mit wenigstens zwei jeweils an einem Tisch befestigten Werkzeugen, wobei wenigstens ein Tisch beweglich geführt in einem Maschinengestell gelagert ist und mittels wenigstens eines Antriebs über ein Getriebe zum Vollzug einer intermittierenden Hubbewegung verlagerbar ist, wobei die Station weiterhin Mittel zur Verstellung einer Eingriffslage der Werkzeuge aufweist.

Beim automatisierten Thermoformen werden üblicherweise entweder zu Rollenware konfektionierte Folien aus thermoplastischem Kunststoff oder aus einem Extruder austretende flache folienartige oder bahnförmige Halbzeuge in einer Form-/Stanzstation geformt und gestanzt sowie ggf. anschließend in einem Ausbrecher oder einer Ausbrecheinrichtung von der Folie getrennt, gestapelt, gezählt und verpackt. Die Folie wird üblicherweise in Verarbeitungsrichtung stromaufwärts der Form-/Stanzstation beispielsweise mit einer Infrarot Heizeinrichtung plastifiziert. Alternativ ist es möglich, ein Extrudat in der ersten Hitze zu verarbeiten. Die Form-/Stanzstationen sind häufig als kombinierte Einrichtungen ausgebildet. Diese umfassen in der Regel zwei Werkzeughälften, die auf Tischen verbaut sind. Beide Tische sind beweglich, derart, dass das Werkzeug eine Öffnungs- und Schließbewegung vollziehen kann. Die erwärmte bzw. plastische Kunststofffolie wird intermittierend zwischen die geöffneten Werkzeuge eingebracht, um ausgeformte und/oder gestanzte Produkte auszubringen. Bekannt ist das Formen und Stanzen in separaten Stationen, ebenso sind kombinierte Form-Stanzstationen beim Thermoformen gebräuchlich.

Die Tische, an denen die Werkzeuge befestigt sind, sind beweglich ausgeführt, um verschiedenste Anwendungen realisieren zu können Diese sind häufig mit Bandstahlwerkzeugen ausgestattet. Bei Verwendung solcher Bandstahlwerkzeuge verbleiben die Produkte nach den Stationen jeweils an wenigstens zwei Haltepunkten in der Folie und werden stromabwärts der Form/Stanzstation mit einem Ausbrecher bzw. einer Ausbrechereinrichtung von der Folie getrennt.

Die Ausformung der Produkte erfolgt mithilfe von Druckluft und/oder Vakuum und/oder mit Hilfe eines mechanischen Streckhelfers, die bei geschlossenen Werkzeugen wirken. Hierzu werden die Werkzeuge beim Schließen in eine Klemmstellung gebracht, wobei sich die Schließkraft aus den Federkräften und den Formluftkräften und eventuell aus Streckhelfer-Kräften ergibt. Die Klemmstellung gewährleistet das Dichten der Werkzeughälften, sodass keine Formluft entweichen kann, sowie das Halten der Folie, sodass die Folie gereckt und tiefgezogen werden kann.

Die Klemmposition der Werkzeuge ist abhängig von den erforderlichen produktspezifischen Klemmkräften, den Prozessparametern und den daraus resultierenden Prozesskräften (Formdruck, Vakuumdruck, Reckkräfte) und dem Verschleißgrad der Maschine und des Werkzeugs sowie deren Elastizität.

Während der Produktion werden die Prozessparameter je nach Anforderung verstellt. Ursache können abweichende Raum- und Folientemperaturen, abweichende Folienqualitäten, abweichende Prozessdrücke und abweichende Prozessgeschwindigkeiten sein. Ein Verstellen der Klemmposition wird mitunter erforderlich, um beispielsweise bei höheren Formkräften durch das Zustellen der Werkzeughälften die Klemmkraft zu erhöhen.

Beim Stanzen ist die Schließposition die Durchstanzposition der Werkzeugschneiden, die Schließkraft ergibt sich aus den Federkräften, der Elastizität der Werkzeuge und der Maschine sowie den Schnittkräften des Folienmaterials.

Die Durchstanzposition bedarf einer hohen Genauigkeit. Ist sie zu klein, so wird nicht geschnitten oder unvollständig geschnitten. Ist sie zu groß, so unterliegen die Werkzeugschneiden einem hohen Verschleiß. Auch die Maschine unterliegt dann einem erhöhten Verschleiß und unter Umständen einer erhöhten elastischen Verformung der Tische, wodurch ein planparalleler Schnitt nicht mehr möglich ist. Der planparallele Schnitt ist zwingend erforderlich, um die Qualität der Produkte und den prozesssicheren Betrieb der Produktionsanlage gewährleisten zu können.

Die Durchstanzkraft ist u. A. abhängig von der verwendeten Folienart, der Folientemperatur, der Foliendicke, von dem verwendeten Werkzeug, der Schneidenschärfe, der Schneidentemperatur, der gesamten Schnittlänge, der Prozessparameter, der Schnittgeschwindigkeit und dem Verschleißgrad der Maschine und des Werkzeugs.

Während der Produktion werden die Prozessparameter je nach Anforderung verstellt, bzw. stellt sich eine veränderte erforderliche Durchstanzkraft ein. Ein Verstellen der Durchstanzposition wird mitunter erforderlich.

Als Alternative zu den separaten Prozessschritten Formen und Stanzen kann ein kombiniertes Verfahren in einer kombinierten Form-/Stanzstation vorgesehen sein.

Die Schließposition ist dabei zunächst eine Anstanzposition der Schneiden, wobei die Folie möglichst weit aber nicht durchgestanzt wird, um die Folie während des Formprozesses zu fixieren. Die Anstanzkraft ergibt sich aus Federkräften von Maschine und Werkzeug, Formluftkräften und Teilschnittkräften des Folienmaterials und evtl. Streckhelferkräften. In dieser Position verweilen die Tische, es erfolgt das Formen und Auskühlen des Produkts. Anschließend erfolgt das Zustellen in die Stanzposition der Schneiden, die Stanzkraft ergibt sich aus Federkräften und Schnittkräften des Folienmaterials.

In jedem der genannten Fälle ist es aus verschiedenen Gründen sinnvoll und wünschenswert, die Klemmposition und/oder die Schließposition und/oder die Durchstanzposition der Werkzeuge verstellen zu können. Diese im Folgenden allgemein als Eingriffslage der Werkzeuge bezeichnete Lage variiert durch
- Maßtoleranzen der Maschinenbauteile
- Maßtoleranzen der verwendeten, produktspezifischen Werkzeuge
- der Verformung der Maschinen- und Werkzeugbauteile
- der spezifischen Schnittkraft des Folienmaterials
- der Foliendicke
- der Folientemperatur
- der Schneidentemperatur des Werkzeugs
- den Schneidenverschleiß des Werkzeugs
- den Lagerverschleiß der Maschine

Aus der DE 10 2018 010 088 A1 ist eine Form-/Stanzstation oder Stanzstation einer Thermoformmaschine der eingangs genannten Art und ein Verfahren zur Kraftkompensation an eine Oberbrücke einer Form-/Stanzstation oder Stanzstation bekannt, bei der eine Oberbrücke bzw. ein Joch des Maschinengestells vertikal verschiebbar ausgebildet ist, um über die einstellbare Höhe der Oberbrücke, die an Säulen geführt ist, die Eingriffslage der Werkzeuge bzw. die Schließposition der Werkzeuge verstellen zu können. Dies erfolgt über einen geregelten Antrieb mit Übertragungsmitteln, wobei die Form-/Stanzstation gemäß DE 10 2018 010 088 A1 einen Aktuator aufweist, der mit mindestens einem seiner Bauteile so an der Oberbrücke angeordnet ist, dass er eine vertikal nach oben gerichtete Kraft auf die Oberbrücke ausübt, wobei der Aktuator einen geregelten Pneumatik-, Hydraulik- oder Elektroantrieb aufweist.

Ein Maschinengestell mit einer verstellbaren Oberbrücke bzw. einem verstellbaren Joch der vorstehend beschriebenen Art ist mit dem Nachteil behaftet, dass aufgrund des Umstandes, dass die Verstellpunkte die Schließkräfte der Werkzeuge direkt übertragen, entsprechend dimensionierte Maschinenelemente zur Bewirkung der Verstellbewegung vorgesehen sein müssen. Die begrenzte Steifigkeit der Übertragungseinheit der einzelnen Verstellpunkte am Maschinengestell gehen einher mit einer nicht gleichmäßigen Verstellung bzw. einem Verklemmen, wenigstens aber einer nicht vollständig planparallelen Verstellung des Maschinengestells. Da eine Verstellung im Bereich von hundertstel Millimeter erfolgen muss, ist eine mangelnde Planparallelität, insbesondere bei Verwendung von Bandstahlwerkzeugen, bei denen schneidende Messer mit einer schneidenden Gegenstanzplatte in Eingriff gelangen, problematisch. Daraus resultiert ein ungleichmäßiger Verschleiß der Schneiden der Werkzeuge. Dies hat zur Folge, dass die Haltepunkte zwischen Folie und Produkt ungleichmäßig dick ausgeführt werden. Das kann zu Problemen beim Ausbrechen sowie zu Qualitätsmängeln am fertigen Produkt führen.

Aus der DE 10 2009 045 543 B4 ist eine Antriebseinheit für eine gattungsgemäße Form- und/oder Stanzanlage zur Erzeugung einer linearen vertikalen Relativbewegung zweier Werkzeugtische zueinander bekannt, die eine oder mehrere Antriebsmotoren, eine Kopplungseinheit, die mit dem einen oder den mehreren Antriebsmotoren verbunden ist und in der für eine Umsetzung der Drehbewegung des einen oder den mehreren Antriebsmotoren in eine Linearbewegung erforderliche Rotationselemente ausschließlich als zentrische Rotationselemente ausgelegt sind, wobei die Kopplungseinheit einen Spindelantrieb und ein Kniehebelsystem in Form eines 5-Punkt-Kniehebelsystems aufweist und die Spindelachse vertikal angeordnet ist.

Die DE 10 2009 045 543 B4 geht davon aus, dass die Relativbewegung zwischen den Werkzeugen in der Regel für eine gewisse Produktart ein Verstellen der Werkzeuge während des Verformungsvorgangs erforderlich ist. Hierzu ist in der Druckschrift eine Positioniereinheit mit einem Positionierantrieb beschrieben, der dazu ausgebildet ist, die Endlage der Werkzeugtische beim Stanzvorgang festzulegen. Auch hier bestehen die gleichen Nachteile durch den zusätzlichen Positionierantrieb wie bei der verstellbaren Oberbrücke.

Eine solche Verstellung während der Produktion bzw. während des Bewegungszyklus der Werkzeuge ist nachteilig, weil keine Kontrolle über die Verstellgüte und insbesondere die Parallelität der Werkzeugtische zueinander gegeben ist.

Der Erfindung liegt daher die Aufgabe zugrunde, eine Station als Formstation oder Stanzstation oder kombinierte Form- Stanzstation einer Thermoformanlage oder Thermoformmaschine zum Herstellen von Formteilen aus einer thermoplastischen Kunststofffolie bereitzustellen, an der eine besonders leichte und präzise Verstellung der Eingriffslage des Werkzeugs oder der Werkzeuge möglich ist.

Die Aufgabe wird gelöst durch eine Station mit den Merkmalen des Anspruchs 1, eine Thermoformanlage mit den Merkmalen des Anspruchs 11 sowie ein Verfahren mit den Merkmalen des Anspruchs 13.

Vorteilhafte Ausgestaltungen der Erfindung ergeben sich aus den Unteransprüchen.

Unter einer Eingriffslage im Sinne der vorliegenden Erfindung ist der größte und der kleinste Arbeitshub oder Streckhub, den die Werkzeuge oder Tische der Station in einem Verstellfenster oder Verstellbereich zur Übertragung von Prozesslasten vollziehen können, zu verstehen. Der Begriff Eingriffslage bezeichnet die Schließposition und/oder die Klemmposition und/ oder die Durchstanzposition der Werkzeuge oder eines Werkzeugs an der entsprechenden Gegenfläche eines anderen Werkzeugs oder einer planen Gegenstanzplatte.

Nach einem ersten Gesichtspunkt der Erfindung wird eine Station als Formstation oder Stanzstation oder kombinierte Form-/Stanzstation einer Thermoformanlage oder Thermoformmaschine zum Herstellen von Formteilen aus einem thermoplastischen Kunststoff bereitgestellt, die wenigstens zwei jeweils an einen Tisch befestigte Werkzeug umfasst, wobei wenigstens ein Tisch beweglich geführt in einem Maschinengestell gelagert ist und mittels wenigstens eines Antriebs über ein Getriebe zum Vollzug einer intermittierenden Bewegung verlagerbar ist. Die Station umfasst Mittel zur Verstellung einer Eingriffslage des Werkzeugs, wobei sich die Station insbesondere dadurch auszeichnet, dass zur Verstellung der Eingriffslage des Werkzeugs der durch den Antrieb bewirkte Hub wenigstens eines Tisches über eine Antriebssteuerung einstellbar ist.

Vorzugsweise sind beide Tische beweglich geführt und angetrieben.

Vorzugsweise ist die Eingriffslage des Werkzeugs ausschließlich über die Antriebssteuerung einstellbar, mit der vorgebbare Haltepositionen des Antriebs angefahren werden können, die jeweils einem vorgegebenen Hub des Tischs entsprechen.

Auf diese Art und Weise kann erfindungsgemäß vorgesehen sein, dass die Station ein steifes, maßhaltiges Maschinengestell umfasst, welches nicht, wie beim Stand der Technik, in der Höhe verstellt werden muss. Die Anforderungen nach einer variablen Eingriffslage der Werkzeuge des beweglichen Maschinentischs oder im Falle mehrerer zueinander beweglicher Maschinentische werden alleine durch den Tischantrieb selbst realisiert. Eine optional etwa an dem Maschinengestell vorgesehene Verstelleinrichtung wird zur Verstellung der Eingriffslage der Werkzeuge bzw. Maschinentische nicht benötigt.

Bei einer bevorzugten Variante der Station gemäß der Erfindung ist vorgesehen, dass der die Tische jeweils über wenigstens ein erstes Hebelgetriebe an das Maschinengestell angelenkt sind.

Das Hebelgetriebe wird hierbei in einem definierten, stufenlosen Verstellfenster des Maschinengestells genutzt. Der Antrieb ist vorzugsweise so dimensioniert, dass die Schließkräfte und oder die Klemmkräfte und/oder die Stanzkräfte innerhalb dieses Verstellfensters bzw. innerhalb dieses Verstellbereichs übertragen werden können.

Eine variable Schließposition kann ausschließlich durch Tischantriebe realisiert werden. Auf eine Gestellverstellung kann verzichtet werden

Das Maschinengestell umfasst in einer besonders vorteilhaften Ausführung vorzugsweise wenigstens zwei Joche und Führungssäulen, die starr miteinander verbunden sind und die eine relativ zu einer Angriffsfläche des Werkzeugs planparallele Führung der Tische innerhalb eines Verstellbereichs während der Übertragung von Prozesslasten beim Thermoformen bewirken. Wie vorstehend bereits erwähnt, ist die Lage des Jochs bezüglich der Führungssäulen während der Bewegungszyklen der Tische nicht veränderbar. Vorzugsweise wirkt der Antrieb über wenigstens einen Schubaktuator auf das erste Hebelgetriebe, wobei der Verstellweg des Schubaktuators zwecks Verstellung der Eingriffslage des Werkzeugs einstellbar ist.

Der Schubaktuator kann beispielsweise über ein zweites Hebelgetriebe auf das erste Hebelgetriebe einwirken. Dadurch, dass das erste Hebelgetriebe mittels eines zusätzlichen zweiten Hebelgetriebes angetrieben wird, kann im Verstellbereich der Schließposition eine hohe Übersetzung erzielt werden, so dass ein großer Verstellweg des Schubaktuators einen nur kleinen Hub des Tisches bewirkt.

Der Schubaktuator kann beispielsweise über einen Servomotor mit einer Positionsregelung angetrieben sein, wobei die Eingriffslage des Werkzeugs über eine Einstellung einer Halteposition des Servomotors vorgegeben werden kann.

Besonders bevorzugt umfasst das Getriebe der Station zwei mit Abstand zueinander angeordnete, parallel wirkende an dem Tisch befestigte erste Hebelgetriebe bzw. Hebelanordnungen, die synchron über einen zentralen Schubaktuator angetrieben sind. Bevorzugt wirkt der zentrale Schubaktuator über zwei gelenkig mit diesem verbundene Hebel als zweite Hebelgetriebe auf die parallel wirkenden ersten Hebelgetriebe, wobei die Hebel der ersten Hebelgetriebe vorzugsweise symmetrisch mit gleichem Abstand zu dem Schubaktuator angeordnet sind, sodass eine symmetrische und zentrale Krafteinleitung durch den Schubaktuator möglich wird. Dadurch heben sich etwa entstehende Querkräfte der Hebelgetriebe auf. Es wird eine bestmögliche, planparallele Bewegung des oder der Tische gewährleistet, woraus eine qualitativ hochwertige Schnittgüte bei einer langen Standzeit der Schneiden erzielt wird. Eine solche symmetrische Krafteinleitung hat ebenfalls Vorteile hinsichtlich der Taktrate der Station. Es ist möglich, hohe Beschleunigungen und Geschwindigkeiten für die Tische zu realisieren.

Bei einer bevorzugten und vorteilhaften Ausführungsform der Station gemäß der Erfindung umfasst diese einen ersten und einen zweiten Tisch mit wenigstens einem ersten und einem zweiten zueinander komplementären Werkzeug, die im Sinne einer Öffnungs- und Schließbewegung relativ zueinander bewegbar in einem gemeinsamen Maschinengestell angeordnet sind.

Der maximal mögliche Verstellweg der Eingriffslage ist vorzugsweise jeweils zur Hälfte für den ersten und den zweiten Tisch vorgesehen.

Bei der Verwendung als kombinierte Form- und Stanzstation ist die Prozesslaststellungen wenigstens eines Tisches und/oder wenigstens eines Werkzeugs sind die Anstanzstellung mit anschließender produktspezifischer Verweilzeit zum Kühlen und das darauf folgende Stanzen, bei der Ausbildung der Station als reine Formstation das Klemmen der Folie sowie bei der Ausbildung der Station als reine Stanzstation das Stanzen der Folie. In jedem Falle ist die Station so ausgelegt, dass in der verstellbaren Eingriffslage Prozesskräfte übertragen werden können.

Die Verstellung der Eingriffslage erfolgt vorzugsweise durch die Hebellage der Hebelgetriebe an beiden Tischen im gleichen Maß.

Die Erfindung umfasst weiterhin eine Thermoformanlage mit wenigstens einer Formstation und/oder einer Stanzstation und/oder einer kombinierten Form-/ Stanzstation mit wenigstens einer der vorstehend beschriebenen Merkmalskombinationen. Die Thermoformanlage gemäß der Erfindung kann beispielsweise eine kombinierte Form-/Stanzstation und eine separate Ausbrechereinrichtung umfassen.

Das Verfahren gemäß der Erfindung zeichnet sich insbesondere dadurch aus, dass eine Verstellung der Eingriffslage der Tische während eines Bewegungszyklus wenigstens eines Tischs ausschließlich über wenigstens einen Tischantrieb vorgenommen wird.

Im Unterschied zum Stand der Technik kann die Verstellung jeder Zeit erfolgen, keine Gestellverstellung muss den Arbeitszyklus unterbrechen. Die Tischantriebe selbst verändern nach dem Öffnen der Tische die nächste Geschlossen-Position

Die Erfindung wird nachstehend anhand eines in den Zeichnungen dargestellten Ausführungsbeispiels erläutert.

Es zeigen:
- Figur 1A: eine schematische Darstellung eines Thermoformverfahrens mit einer kombinierten Form-/Stanzstation gemäß der Erfindung,
- Figur 1B: eine schematische Veranschaulichung des Thermoformverfahrens mit einer Formstation und einer Stanzstation, die jeweils nach der Erfindung ausgebildet sind, und
- Figur 2A: eine schematische Ansicht eines Teils des Maschinengestells einer Form-/Stanzstation gemäß der Erfindung, bei der sich der Tisch in maximal gestreckter Prozesslast-Lage befindet und
- Figur 2B: eine der Figur 2 A entsprechende Ansicht, bei der sich der Tisch in der minimal gestreckten Prozesslast-Lage befindet.

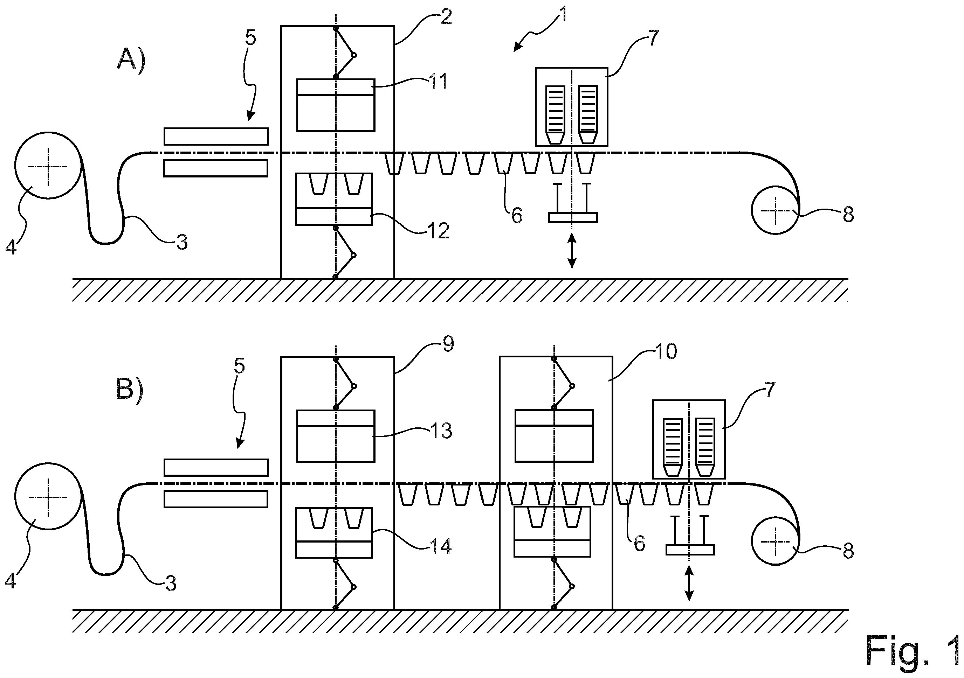

In Figur 1A ist eine erste Variante eines Thermoformverfahrens bzw. einer Thermoformmaschine 1 gemäß der Erfindung dargestellt. Das Thermoformverfahren nach dem Ausführungsbeispiel gemäß Figur 1A wird mit einer kombinierten Form-/ Stanzstation 2 durchgeführt, in der eine plastifizierte Kunststofffolie 3 zunächst angestanzt und nach anschließender produktspezifischer Verweilzeit zum Kühlen durchgestanzt wird. Die Kunststofffolie 3 wird zunächst von einer Vorratsrolle 4 abgerollt und in einer Infrarot-Heizeinrichtung 5 plastifiziert. Stattdessen kann auch die Kunststofffolie als bahnförmiges Extrudat aus einem entsprechend ausgebildeten Extruder bereitgestellt werden und in der ersten Hitze in der kombinierten Form-/Stanzeinrichtung 2 geformt werden. In der Form-Stanzeinrichtung 2 wird die Kunststofffolie 3 zunächst, wie vorstehend bereits erwähnt, angestanzt, dann durchgestanzt, und zwar derart, dass das Produkt 6 noch an wenigstens zwei Haltepunkten in der Kunststofffolie 3 verbleibt. In einer stromabwärts der Form-/Stanzstation 2 angeordneten Ausbrechereinrichtung 7 erfolgt das Ausbrechen, Stapeln und Zählen des Produkts 6. Das verbleibende Foliengitter wird beispielsweise mit einem Haspel 8 aufgewickelt. Alternativ ist eine Zerkleinerung bzw. Aufmahlung des Foliengitters zwecks Herstellung eines Rezyklats möglich.

Der in Figur 1B gezeigte Vorgang unterscheidet sich von demjenigen, der in Figur 1A dargestellt ist, dadurch, dass die Thermoformmaschine 1 eine Formstation 9 und eine Stanzstation 10 umfasst, die in der Bearbeitungsreihenfolge hintereinander angeordnet sind. Gleiche Bauteile sind mit gleichen Bezugszeichen bezeichnet.

Die kombinierte Form-/Stanzstation 2 und die Formstation 9 als auch die Stanzstation 10 umfassen jeweils eine Schließpositionsverstellung gemäß der Erfindung und werden daher nachstehend der Einfachheit halber als Station bezeichnet.

Im Folgenden wird unabhängig davon, zu welchem Zweck die Werkzeuge vorgesehen sind, der größte und der kleinste gestreckte Hub, den die Werkzeuge der Thermoformmaschine 1 in einem Verstellfenster zur Übertragung von Prozesslasten vollziehen können, als Eingriffslage bezeichnet.

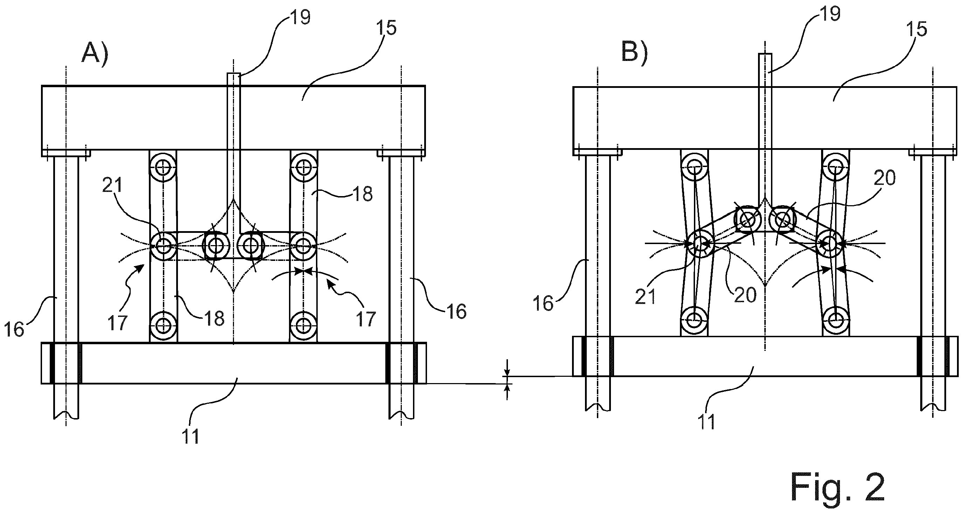

Ein Teil eines Maschinengestells einer Station gemäß der Erfindung wird im Folgenden anhand der Figuren 2A und 2B erläutert. Dabei wird davon ausgegangen, dass die Station ein oberes Maschinengestell und ein unteres Maschinengestell umfasst, wobei jedes Maschinengestell einen beweglich gelagerten Tisch 11 umfasst, der einen Teil des Werkzeugs, vorzugsweise in Form eines Bandstahlwerkzeugs trägt. Jede Station umfasst einen ersten oberen Tisch 11 und einen zweiten unteren Tisch 12 sowie ein erstes oberes Werkzeug 13 und ein zweites unteres Werkzeug 14. Die Tische 11,12 und mit diesen die Werkzeuge 13,14 sind mittels eines nicht dargestellten Antriebs synchron und planparallel zueinander geführt in einer intermittierenden Öffnungs- und Schließbewegung zueinander bewegbar.

Das kinematische Prinzip und auch die Schließpositionsverstellung/Verstellung der Eingriffslage der Werkzeuge 13, 14 ist bei jeder der Stationen gemäß der Erfindung identisch, sei es bei einer kombinierten Form-/Stanzstation 2 oder bei einer Formstation 9 oder einer Stanzstation 10. Dieses kinematische Prinzip kann auch Anwendung finden bei einer Station, bei der lediglich ein unterer Tisch mit einem ersten unteren Werkzeug 13 relativ zu einer feststehend angeordneten oberen Werkzeug bewegt wird. Daher wird im folgenden nur Bezug genommen auf die Kinematik des in den Figuren 2A und 2B gezeigten oberen Maschinengestells.

Dieses Maschinengestell umfasst ein Joch 15, an dem mindestens zwei Führungssäulen 16 für einen planparallel zu dem Joch 15 geführten Tisch 11 angeordnet sind. Der Tisch 11 (erster oberer Tisch) ist in bekannter Art und Weise gleitend an den Führungssäulen 16 bewegbar geführt. Zwischen dem Joch 15 und dem Tisch 11 sind jeweils zwei erste Hebelgetriebe 17 angeordnet, die jeweils als Kniehebelgetriebe ausgebildet sind und die jeweils zwei gelenkig miteinander verbundene erste Hebel 18 umfassen. Die Anordnung umfasst einen zentralen Schubaktuator 19, der über zweite Hebel 20 auf das erste Hebelgetriebe 17 einwirkt. Die zweiten Hebel 20 sind jeweils an einem Ende des Schubaktuators 19 und einem Kniegelenk 21 der ersten Hebelgetriebe 17 angelenkt, derart, dass eine Auf- und Ab Bewegung des Schubaktuators 19 eine symmetrische Verstellung der ersten Hebel 18 des ersten Hebelgetriebes 17 bewirkt. Damit einher geht eine planparallele und intermittierende Verstellung des Tisches 11. Der Schubaktuator 19 ist über ein Zahnstangengetriebe (nicht dargestellt) eines als Servomotor ausgebildeten Antriebs auf und ab verstellbar. Die an dem Schubaktuator 19 angelenkten zweiten Hebel 20 bilden jeweils ein zweite Hebelgetriebe, das auf das erste Hebelgetriebe 17 symmetrisch einwirkt und dieses entsprechend antreibt. Der Verstellbereich des Tisches 11 zur Einstellung einer Schließposition außerhalb der Bewegungszyklen der Station erfolgt über die vorgegebene Endposition des Schubaktuators 19 bzw. über die vorgegebene eingestellte Halteposition des diesen bewegenden Antriebs. Aufgrund des Umstandes, dass der Schubaktuator 19 über zweite Hebel 20 auf das erste Hebelgetriebe 17 einwirkt, lässt sich über einen verhältnismäßig großen Verstellweg des Schubaktuators 19 ein verhältnismäßig kleiner Verstellweg des Tisches 11 realisieren, wie sich aus der Zusammenschau der Figuren 2A und 2B ergibt. Ein kleiner Verstellweg je Tisch 11 wird durch einen ungleich größeren Verstellweg des Schubaktuators 19 bewirkt.

Besonders vorteilhaft ist, dass das Joch 15 und die Führungssäulen 16 einen starren und nachhaltigen Rahmen bilden und dass eine Verstellung des Jochs 15 bezüglich der Führungssäulen 16 nicht während der Produktion oder dessen Optimierung betrieben wird. Eine Verstellbewegung wird während der Produktion bzw. während der Arbeitshübe ausschließlich über den Antrieb der Tische realisiert, und zwar über die Vorgabe der Halteposition des Antriebs bzw. der Antriebe.

Der Verstellweg wird in den Figuren anhand des Unterschiedes zwischen Figur 2A und Figur 2B veranschaulicht, wobei 2A den größtmöglichen Hub des Tisches 11 zwecks Lastübertragung und Figur 2B den kleinstmöglichen Hub des Tisches zwecks Lastübertragung veranschaulicht. Die Anforderung nach variablen Schließpositionen bzw. variabler Eingriffslage der Tische 11,12 wird allein durch die Antriebe selbst realisiert. Die Hebelgetriebe werden hierbei in einem definierten, stufenlosen Verstellfenster abweichend von der Strecklage genutzt. Der Antrieb ist in vorteilhafter Art und Weise so dimensioniert, dass die Schließkräfte in diesem Verstellfenster übertragen werden können. Die erforderliche Positionsgenauigkeit des oder der Antriebe wird durch Servomotor mit exakter Positionsregelung erreicht. Durch den Umstand, dass die ersten Hebelgetriebe 17, die symmetrisch mit gleichem Abstand zu dem Schubaktuator 19 angeordnet sind, über zweite Hebelgetriebe eine Bewegung des Tischs bewirken, kann bei einem großen Weg des Schubaktuators 19 ein verhältnismäßig kleiner Verstellbereich der Schließposition bzw. der Eingriffslage erzielt werden. Hiermit sind Verstellungen im Bereich von Hundertstel Millimetern einfach realisierbar. Zudem sind durch diese Übersetzung große Schließkräfte realisierbar.

### Bezugszeichenliste

- 1: Thermoformmaschine
- 2: kombinierte Form-/Stanzstation
- 3: Kunststofffolie
- 4: Vorratsrolle
- 5: Infrarot-Heizeinrichtung
- 6: Produkt
- 7: Ausbrechereinrichtung
- 8: Haspel
- 9: Formstation
- 10: Stanzstation
- 11: erster Tisch
- 12: zweiter Tisch
- 13: erstes Werkzeug
- 14: zweites Werkzeug
- 15: Joch
- 16: Führungssäulen
- 17: erstes Hebelgetriebe
- 18: erster Hebel
- 19: Schubaktuator
- 20: zweite Hebel
- 21: Kniegelenk

## Patentansprüche

1. Station als Formstation (9) oder Stanzstation (10) oder kombinierte Form-/Stanzstation (2) einer Thermoformanlage oder Thermoformmaschine (1) zum Herstellen von Formteilen aus einer thermoplastischen Kunststofffolie (3), umfassend wenigstens zwei jeweils an einem Tisch befestigten Werkzeuge, wobei wenigstens ein Tisch beweglich geführt in einem Maschinengestell gelagert ist und mittels wenigstens eines Antriebs über ein Getriebe zum Vollzug einer intermittierenden Hubbewegung verlagerbar ist, wobei die Station weiterhin Mittel zur Verstellung einer Eingriffslage der Werkzeuge aufweist, **dadurch gekennzeichnet, dass** zur Verstellung der Eingriffslage der Werkzeuge der durch den Antrieb bewirkte Hub wenigstens eines Tisches über eine Antriebssteuerung einstellbar ist, mit der vorgebbare Haltepositionen des Antriebs angefahren werden können, die jeweils einem vorgegebenen Hub des Tischs entsprechen.

2. Station nach Anspruch 1, **dadurch gekennzeichnet, dass** wenigstens ein Tisch über wenigstens ein erstes Hebelgetriebe (17) an das Maschinengestell angelenkt sind.

3. Station nach einem der Ansprüche 1 oder 2, **dadurch gekennzeichnet, dass** das Maschinengestell wenigstens ein Joch (15) und Führungssäulen (16) umfasst, die starr miteinander verbunden sind und die für eine relativ zu einer Eingriffsfläche des Werkzeugs planparallele Führung des Tisches innerhalb eines Verstellfensters während der Übertragung von Prozesslasten beim Thermoformen ausgebildet sind.

4. Station nach einem der Ansprüche 1 bis 3, **dadurch gekennzeichnet, dass** der Antrieb über wenigstens einen Schubaktuator (19) auf das erste Hebelgetriebe (17) wirkt, wobei der Verstellweg des Schubaktuators (19) zwecks Verstellung der Eingriffslage der Werkzeuge einstellbar ist.

5. Station nach einem der Ansprüche 1 bis 4, **dadurch gekennzeichnet, dass** der Schubaktuator (19) über ein zweites Hebelgetriebe auf das erste Hebelgetriebe (17) wirkt.

6. Station nach einem der Ansprüche 1 bis 5, **dadurch gekennzeichnet, dass** der Schubaktuator (19) über einen Servomotor mit einer Positionsregelung angetrieben wird, wobei die Eingriffslage der Werkzeuge über eine Einstellung einer Halteposition des Servomotors einstellbar ist.

7. Station nach einem der Ansprüche 5 oder 6, **dadurch gekennzeichnet, dass** der Antrieb über ein Zahnstangengetriebe auf die Schubstange wirkt.

8. Station nach einem der Ansprüche 1 bis 7, **dadurch gekennzeichnet, dass** das Getriebe mit Abstand zueinander angeordnete, parallel wirkende an dem Tisch befestigte erste Hebelgetriebe (17) umfasst, die synchrone über einen zentralen Schubaktuator (19) angetrieben sind.

9. Station nach einem der Ansprüche 1 bis 8, **dadurch gekennzeichnet, dass** diese einen ersten (11) und einen zweiten Tisch (12) mit wenigstens einem ersten (13) und einem zweiten zueinander komplementären Werkzeug (14) umfasst, die im Sinne einer Öffnungs- und Schließbewegung relativ zueinander bewegbar in einem gemeinsamen Maschinengestell angeordnet sind.

10. Station nach einem der Ansprüche 1 bis 9, **dadurch gekennzeichnet, dass** ein maximal möglicher Verstellweg der Eingriffslage jeweils zur Hälfte für den ersten (11) und den zweiten Tisch (12) vorgesehen ist.

11. Thermoformanlage (1) mit wenigstens einer Formstation (9) und/oder einer Stanzstation (10) und/ oder einer kombinierten Form-/Stanzstation (2) mit wenigstens einer Station gemäß einem der Ansprüche 1 bis 10.

12. Thermoformanlage (1) nach einem der Ansprüche 10 oder 11, die weiterhin wenigstens eine separate Ausbrechereinrichtung (7) umfasst.

13. Verfahren zur Verstellung der Eingriffslage der Werkzeuge an einer Station mit den Merkmalen eines der Ansprüche 1 bis 9, wobei sich das Verfahren dadurch auszeichnet, dass eine Verstellung der Eingriffslage der Werkzeuge über einen durch den Antrieb bewirkten Hub wenigstens eines beweglichen Tisches ausschließlich über wenigstens einen Tischantrieb vorgenommen wird.

14. Verfahren nach Anspruch 13, **dadurch gekennzeichnet, dass** eine Verstellung der Eingriffslage der Werkzeuge während der Bewegungszyklen des wenigstens einen Tischs ausschließlich ohne eine Verstellung des Maschinengestells erfolgt.
